# EUROPEAN PATENT SPECIFICATION

(11) **EP 2 072 806 B1**
(45) Date of publication and mention of the grant of the patent: **14.12.2011**
(21) Application number: 07150300.7
(22) Date of filing: 21.12.2007
(51) Int. Cl.: F02M 69/46, F16B 5/02

(54) **Flexible mounting arrangement**
Flexible Montageanordnung
Agencement d'assemblage flexible

(43) Date of publication of application: 24.06.2009
(60) Divisional application: 11151548.2
(73) Proprietor: Caterpillar Motoren GmbH & Co. KG, 24159 Kiel (DE)
(72) Inventor: Volker, Abraham, 24159 Kiel (DE)
(74) Representative: Preuss, Udo

(56) References cited:
- WO-A-2004/085188
- GB-A- 2 023 729
- US-A- 4 586 477

## Description

### Technical Field

This patent disclosure relates generally to a flexible mounting arrangement and more particularly, to a flexible mounting arrangement having a set of lamellae.

### Background

Internal combustion engine design is subject to increasingly stringent emissions regulations. Many advancements have been made over the years and one particular type of engine design is becoming increasingly popular because of its flexibility in engine control strategies. This type of engine is known as a common rail and although various designs exist they tend to operate on the same principle. At least two or more injectors are fed fuel from the same fuel gallery. The fuel gallery may during operation be continuously pressurised such that pressurised fuel may be standing at the inlet of each fuel,injector. Each fuel injector may then be controlled to open the injection channel such that fuel from the shared gallery can be injected in a particular combustion chamber. There is a demand for engines, for example large medium speed engines, that can run on heavy fuels or alternative fuels. Such fuels may at ambient temperature not have the right viscosity or be suitable for injection. For example, certain heavy fuels may have to be heated to well in excess of a 100°C before they become suitable for injection. This may require specialist heating devices to heat the fuel. It has been found that a combination of a shared fuel gallery such as found on common rail engines and the requirement to heat fuel to relatively high temperatures may cause problems due to expansion of components. The shared fuel gallery must be securely mounted on the engine, but any mounting arrangement must allow sufficient flexibility to cope with expansion of the fuel gallery. International patent publication WO 2004/085188 A discloses an exhaust-system support comprising a supporting element in the form of a laminated support consisting of two strip-type; elastic plates which are superimposed in the form of a stack and can be displaced in relation to each other over at least part of the length thereon Furthermore British patent publication GB 2 023 729 A discloses a fuel injection apparatus for an internal combustion engine, comprising a valve, a first support element adapted to locate a first portion of the valve relative to such engine, a fuel duct connecting element so pluggable over a second portion of the valve as to be removable without loosening the valve from said location thereof, an outwardly acting seal disposed between the second portion of the valve and the connecting element, and a second support element at least indirectly locating the connecting element in a predetermined position. The current disclosure is aimed at overcoming or alleviating some or all of the aforementioned problems.

### Summary of the Invention

In a first aspect, the present application discloses an internal combustion engine comprising a first engine portion, a fuel rail and a flexible mounting arrangement. The flexible mounting arrangement comprises a set of lamellae having at least two lamellae arranged adjacent one another, said set of lamellae having a first portion for connecting to said first engine portion and a second portion for a connecting via a bracket to said fuel rail, at least one of said first and second portion including base portions of said at least two lamellae are clamped together.

In a second aspect, the present application discloses a method of operating an internal combustion engine including running into the combustion engine, thermally expanding a component connected with the internal combustion via a set of lamellae having at least a two adjacently arranged lamellae and bending the set lamellae to accommodate expansion of said component.

Other features and aspects of this disclosure will be apparent from the following description and the accompanying drawings.

### Brief Description of the Drawings

Fig. 1 is a schematical representation of an isometric view of a portion of a fuel system for an internal combustion engine.

Fig. 2 is a schematical representation showing an exemplary embodiment of a flexible mounting arrangement for the fuel system of Fig. 1.

Fig. 3 is similar to Fig. 2 but as viewed from a different angle.

### Detailed Description

The following description demonstrates one or more exemplary embodiments of the current disclosure.

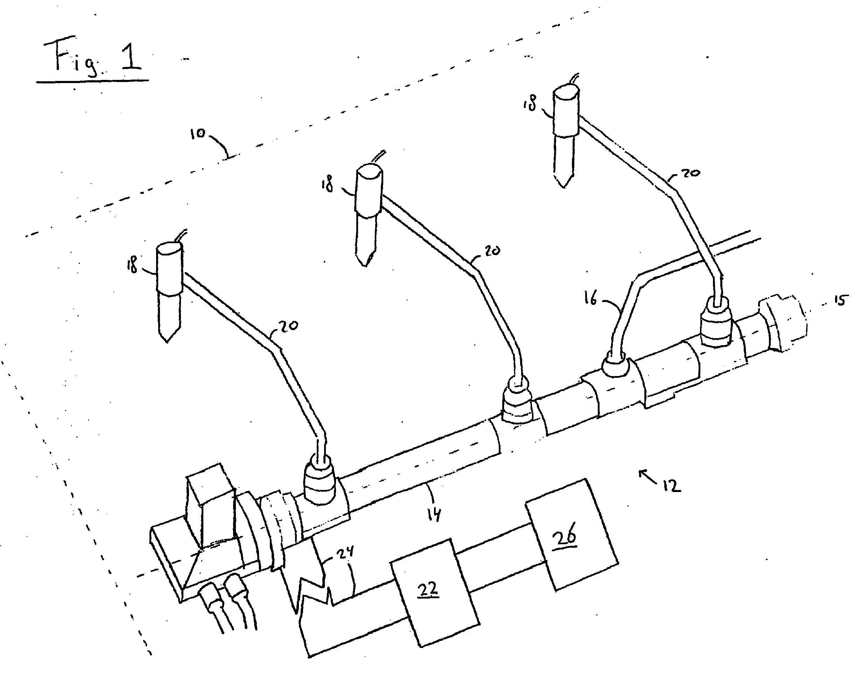

Referring to Fig.l, an internal combustion engine 10, which is schematically outlined with a dotted line may be provided with a fuel system 12. In Fig. 1, the fuel system 12 is shown as a common rail fuel system. In this embodiment the fuel system 12 has at least one rail 14 having a first generally longitudinal axis 15. The rail 14 may be connected to a second rail 14 (not shown) if preferred. The two rails 14 may be independent or they may be fluidly connected by for example a transfer conduit 16. The rail 14 may be fluidly connected with any number of injectors 18 via conduits 20. Each injector 18 may be provided with a suitable actuation arrangement (not shown) such as mechanical, fluid, or electronic actuation to actuate the injector 18 thereby selectively allowing fuel to pass through the injector 18 into a combustion chamber (not shown) associated with the respective injector 18. The rail 14 may act as a storage chamber for pressurized fuel. The fuel may be supplied by a pump 22 via a conduit 24. Where the fuel used is a heavy fuel such that at ambient temperatures the fuel displays a high viscosity, it may be desirable to provide a heating arrangement 26 to heat the fuel such that the viscosity is low enough for the fuel to pass effectively through the fuel system 12. The heating arrangement may for example heat the fuel to a temperature well in excess of 100° Celsius. The heating arrangement 26 may be of any suitable type and may be placed at any suitable position, for example it may be positioned upstream or downstream from the pump 22.

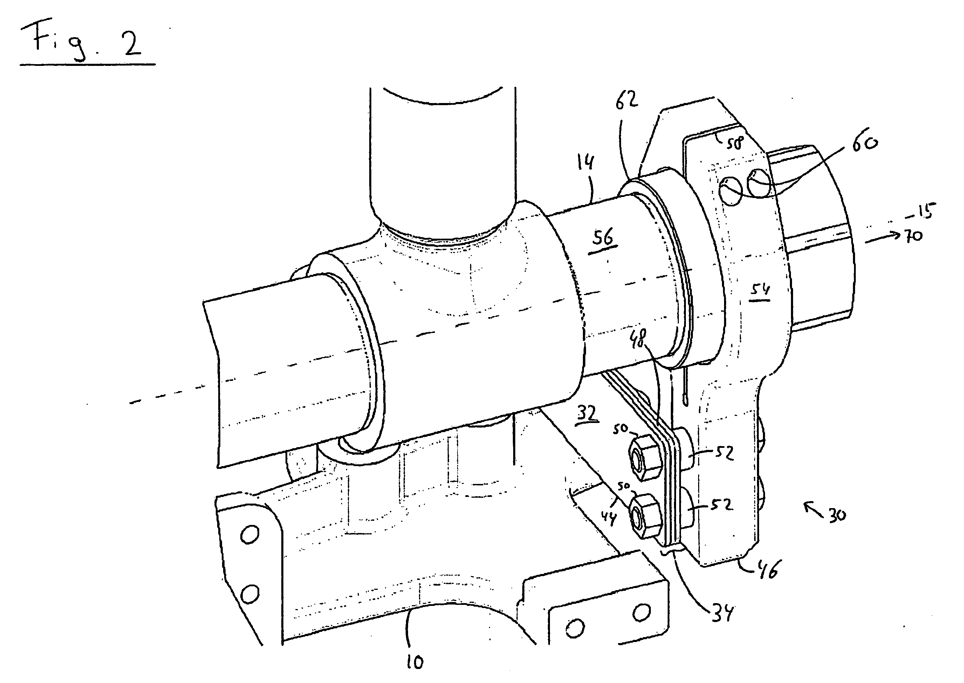

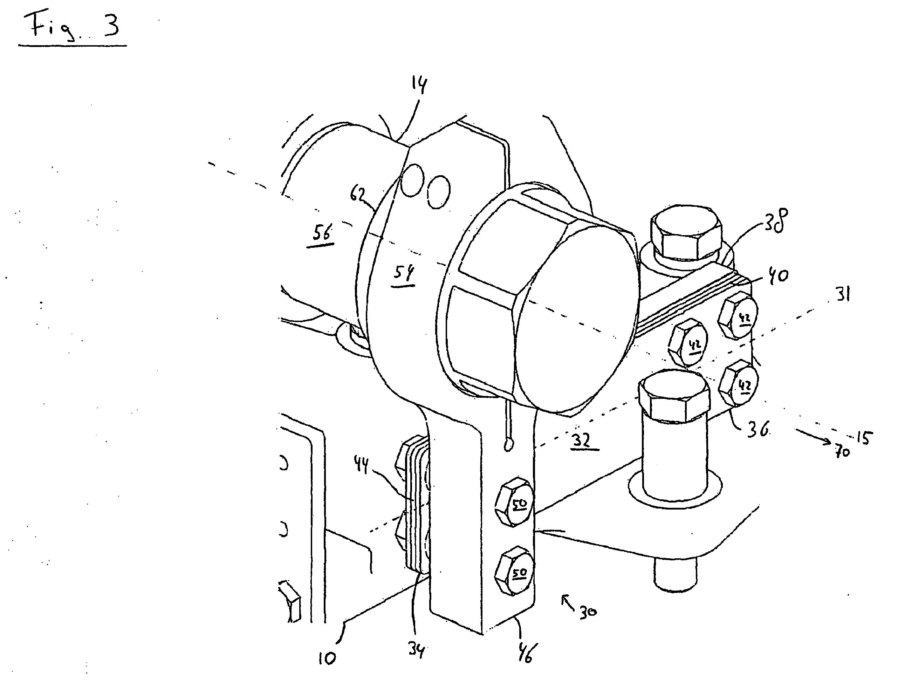

The rail 14 is mounted onto the engine 10 via a flexible mounting arrangement 30 shown in more detail in Figs. 2 and 3.

The mounting arrangement 30 comprises a set of lamellae 32 having, at a neutral position, a second generally longitudinal axis 31. In one embodiment the first and second generally longitudinal axes 15 and 31 may be substantially perpendicular to one each other.

The set of lamellae 32 have at least two lamellae 34 arranged adjacent to each other. In one embodiment as, shown in Figs. 2 and 3, the set of lamellae 32 include three lamellae 34, but any multiple number of lamellae 34 may be chosen if preferred.

The lamellae may be formed as preferred, but in one embodiment at least one of the lamellae 34 may be formed from sheet metal in accordance with engineering standard St52-3. In one embodiment the thickness of at least one or of all lamellae is about 3 millimeter. In one embodiment the lamellae may have a generally rectangular shape. In other embodiments the lamellae may be generally shaped like, for example, squares, triangles, circles, ovals or any other suitable shape.

The set of lamellae 32 has a first portion 36 for connecting to a first engine portion (38) The base portions 40 may be clamped together and fixed to the first engine portion 38 via one or more fasteners 42 extending through holes 41 in the lamellae 34. However, the function of clamping the lamellae 34 and connecting the set of lamellae 32 to the first engine portion 38 do not have to be combined and may be performed by different fastening arrangements.

In one embodiment the base portions 40 of the lamellae 34 are clamped together such that no significant movement can take place of at least one base portion 40 relative to at least one other base portion 40.

The set of lamellae 32 comprises a second portion 44 for connecting to a fuel rail (14) via a bracket (54). The second portion 44 may include base portions 48 of the lamellae 34 that are clamped together and connected to the bracket 854 via one or more fasteners 50 extending through holes 51 in the lamellae 34. However, the function of clamping the lamellae 34 and connecting the set of lamellae 32 to the first engine portion 38 do not have to be combined and may be performed by different fastening arrangements.

In one embodiment the base portions 40, 48 of the lamellae 34 are clamped together such that no significant movement can take place of at least one base portion 40, 48 relative to at least one other base portion 40, 48.

It is to be understood that the fasteners 42 and 50 are shown as threaded fasteners whereby each fastener 42 threads into a blind hole (not shown) in the first element 38 and each fastener 50 is of the nut-and-bolt type. However, these are exemplary embodiments only and other fastening arrangements may be chosen if preferred. Any selected fastening arrangement may be provided with locking features to prevent the fastening arrangement from loosening during operation.

The holes 41 and 51 in the lamellae 34 may be provided to correspond to the preferred fastening arrangement, but in one embodiment the holes in at least one or all of the lamellae are manufactured to DIN EN 20273. Manufacturing the holes 41 and 51 to this standard may contribute to reducing or preventing any significant movement of at least one base portion 40 relative to at least one other base portion 40, and/or of at least one base portion 48 relative to at least one other base portion 48.

In one embodiment one or more spacers 52 may be provided between the set of lamellae 32 and the bracket 54 In a similar vain, spacers (not shown) may be provided between the set of lamellae 32 and the first element 38.

The bracket 54 is for connecting with rail 14. The bracket 54 may be provided with a split 58 to enable the bracket 54 to be clamped around the rail 14 with a fastening arrangement 60 which may include for example threaded fasteners.

In one embodiment an elastomeric member 62 may be incorporated in the flexible mounting arrangement 30. In the embodiment shown in Figs. 2 and 3 the elastomeric member 62 is interposed between the bracket (54) and the rail 14. However, the elastomeric member may also be positioned at any other suitable position such as between the set of lamellae 32 and the bracket 54. In one embodiment the spacers 52 and the elastomeric member 62 may be co-located and/or even joined together to form a single component. The elastomeric member 62 may be made of any suitable material such as for example a rubber or rubber compound.

### Industrial Applicability

Using a mounting arrangement such as flexible mounting arrangement 30 may provide a durable and flexible connection between two elements. The flexible mounting arrangement 30 is to be used on the engine 10 to connect a rail 14 to another portion of the engine 10. During operation the rail 14 may get hot as it may act as a conduit and/or temporary storage chamber for fuel which has been preheated to relatively high temperatures. Depending on the size, shape, temperature and material of the rail 14 and associated components, the rail 14 may undergo significant thermally induced expansions and contractions. If the rail 14 was to be fixed such that no arrangements were made to compensate for the expansions and contractions, material failures may occur in the rail 14 and/or any elements connected thereto. Conversely, if the rail 14 was left wholly or partially loose, vibrations and movement of the rail 14 may also lead to material failures.

However, the flexible mounting arrangement 30 is configured to adapt its shape to accommodate thermal expansion and contraction. Once again referring to Figs. 1-3, in an exemplary operation the rail 14 may expand due to the heat transferred from the pre-heated fuel. In an element such as rail 14 this may manifest itself predominantly as an extension along the longitudinal axis 15. As the bracket 54 is connected to the rail 14, the bracket 54 is subject to a force 70 in a direction generally away from the engine 10. The set of lamellae 32 can due to its laminar construction bend generally between the first and second base portions 40 and 44. The lamellae 34 are configured to bend simultaneously whilst the base portions 40 of at least two or all lamellae 34 may remain in a substantially fixed position relative to each other. Similarly, the base portions 48 of at least two or all lamellae 34 may remain in a substantially fixed position relative to each other. By being configured as such, the set of lamellae 32 allows the first and second portions 36 and 44 to move relative to each other. The bracket 54 therefore can move with an associated portion of the rail 14 under the influence of the force 70 whilst remaining securely connected to the engine 10 via the first element 38. During this process the elastomeric member 62 may be deformed to at least partially compensate for misalignment caused by the bending of the set of lamellae 32. For example, the elastomeric element may compensate for misalignment between the bracket 54 and the rail 14. Additionally, or alternatively, the spacers 52 may reduce or eliminate the transfer of any undesired mechanical stresses between the set of lamellae 32 and the first and/or second portions 36 and 40.

By flexing the set of lamellae 32, the set of lamellae 32 may exert a counter force to the force 70 with a tendency to bias the set of lamellae 32 to a neutral position. This counterforce may contribute to the flexible mounting arrangement 30 providing a durable, strong and stable arrangement whilst allowing flexibility. The neutral position in this context may be interpreted as a position in which the set of lamellae 32 is subjected to a minimal amount of bending moment. However, if preferred, the set of lamellae may be designed or fitted such that a certain amount of bending moment is present in the neutral position i.e. the set of lamellae may be pre-stressed.

It is to be understood that the aforementioned processes may be wholly reversible in case of thermal contraction.

Although the preferred embodiments of this invention have been described herein, improvements and modifications may be incorporated without departing from the scope of the following claims.

### LIST OF ELEMENTS

### TITLE: FLEXIBLE MOUNTING ARRANGEMENT

### FILE: 06-753

- 10.: internal combustion engine
- 12.: fuel system
- 14.: rail
- 15.: longitudinal axis
- 16.: transfer conduit
- 18.: injector
- 20.: conduit
- 22.: pump
- 24.: conduit
- 26.: heating arrangement
- 30.: flexible mounting arrangement
- 31.: longitudinal axis
- 32.: set of lamellae
- 34.: lamella
- 36.: first portion
- 38.: first element
- 40.: base portion
- 41.: hole
- 42.: fastener
- 44.: second portion
- 46.: second element
- 48.: base portion
- 50.: fastener
- 51.: hole
- 52.: spacer
- 54.: bracket
- 56.: third element
- 58.: split
- 60.: fastening arrangement
- 62.: elastomeric element
- 70.: force

## Claims

1. An internal combustion engine (10) comprising:
a first engine portion (38);
a fuel rail (14);
a bracket (54) configured to connect with said fuel rail (14); and a flexible mounting arrangement (30) **characterized in that** the flexible mounting arrangement comprises:
a set of lamellae (32) having at least two lamellae (34) arranged adjacent one another, said set of lamellae (32) having a first portion (36) for connecting to said first engine portion (38) and a second portion (44) for connecting to said fuel rail (14) via said bracket (54), at least one of said first and second portions (36, 44) including base portions (40, 48) of said at least two lamellae (34) that are clamped together.

2. An internal combustion engine (10) according to claim 1, wherein said base portions (40, 48) of said at least two lamellae (34) are in a substantially fixed position relative to each other.

3. An internal combustion engine (10) according to any of the preceding claims, wherein at least one spacer (52) is provided between said set of lamellae (32) and said bracket (54)

4. An internal combustion engine (10) according to any of the preceding claims, wherein said fuel rail (14) is connected to said bracket (54) and an elastomeric member (62) is interposed between said fuel rail (14) and said bracket (54)

5. An internal combustion engine (10) according to any of the preceding claims, wherein an elastomeric member (62) is interposed between said set of lamellae (32) and said bracket (54).

6. An internal combustion engine (10) according to claim 4, wherein at a neutral position said set of lamellae (32) and said fuel rail (14) define first and second longitudinal axes (15, 31) respectively, wherein said first and second longitudinal axes (15, 31) are substantially perpendicular to each other.

7. An internal combustion engine (10) according to any of the preceding claims, wherein said at least two lamellae (34) are configured to bend simultaneously.

8. An internal combustion engine (10) according to any of the preceding claims, wherein said set of lamellae (32) is configured to bias said first and second portions (36, 44) towards a first position relative to each other.

9. An internal combustion engine (10) according to any of the preceding claims, wherein said flexible mounting arrangement (30) is configured to adapt its shape to accommodate thermal expansion of at least one of said fuel rail (14) and said bracket (54).

10. An internal combustion engine (10) according to claim 1, wherein both said first and second portions (36, 44) include base portions (40, 48) of said at least two lamellae (34) that are clamped together.

11. A method of assembling an internal combustion engine (10) **characterized in that** this method comprises:
running said internal combustion engine (10);
thermally expanding a component connected with said internal combustion engine (10) via a set of lamellae (32) having at least two adjacently arranged lamellae (34);
bending said set of lamellae (32) to accommodate expansion of said component.

12. A method according to claim 11, further including deforming an elastomeric member (62) to at least partially compensate for misalignment caused by said bending of said set of lamellae (34).

## Patentansprüche

1. Brennkraftmaschine (10) mit innerer Verbrennung mit:
einem ersten Motorbereich (38);
einem Kraftstoffverteilerrohr (14);
eine zum Verbinden mit dem Kraftstoffverteilerrohr (14) ausgebildete Klammer (54); und
eine flexible Befestigungsanordnung (30) mit:
einem Lamellensatz (32), der wenigstens zwei nebeneinander angeordnete Lamellen (34) aufweist, wobei der Lamellensatz (32) einen ersten Bereich (36) zum Verbinden mit dem ersten Motorbereich (38) und einen zweiten Bereich (44) zum Verbinden mit dem Kraftstoffverteilerrohr (14) über die Klammer (54) besitzt, wobei wenigstens der erste oder der zweite Bereich (36, 44) Basisbereiche (40, 48) der wenigstens zwei Lamellen (34) aufweist, die zusammengeklemmt sind.

2. Brennkraftmaschine (10) mit innerer Verbrennung nach Anspruch 1, wobei die Basisbereiche (40, 48) der wenigstens zwei Lamellen (34) im Wesentlichen in einer fixen Stellung zueinander sind.

3. Brennkraftmaschine (10) mit innerer Verbrennung nach einem der vorhergehenden Ansprüche, wobei wenigstens ein Abstandsstück (52) zwischen dem Lamellensatz (32) und der Klammer (54) vorgesehen ist.

4. Brennkraftmaschine (10) mit innerer Verbrennung nach einem der vorhergehenden Ansprüche, wobei das Kraftstoffverteilerrohr (14) mit der Klammer (54) verbunden ist und sich ein elastomerisches Bauteil (62) zwischen dem Kraftstoffverteilerrohr (14) und der Klammer (54) befindet.

5. Brennkraftmaschine (10) mit innerer Verbrennung nach einem der vorhergehenden Ansprüche, wobei sich ein elastomerisches Bauteil (62) zwischen dem Lamellensatz (32) und der Klammer (54) befindet.

6. Brennkraftmaschine (10) mit innerer Verbrennung nach Anspruch 4, wobei der Lamellensatz (32) und das Kraftstoffverteilerrohr (14) in einer neutralen Position jeweils erste und zweite Längsachsen (15, 31) definieren, wobei die erste und zweite Längsachse (15, 31) im Wesentlichen senkrecht zueinander sind.

7. Brennkraftmaschine (10) mit innerer Verbrennung nach einem der vorhergehenden Ansprüche, wobei die wenigstens zwei Lamellen (34) dazu ausgebildet sind, sich gleichzeitig zu biegen.

8. Brennkraftmaschine (10) mit innerer Verbrennung nach einem der vorhergehenden Ansprüche, wobei der Lamellensatz (32) dazu ausgebildet ist, den ersten und zweiten Bereich (36, 44) in Richtung einer ersten Position relativ zueinander unter Vorspannung zu setzen.

9. Brennkraftmaschine (10) mit innerer Verbrennung nach einem der vorhergehenden Ansprüche, wobei die flexible Befestigungsanordnung (30) dazu ausgebildet ist, ihre Gestalt zum Aufnehmen von thermischer Expansion von wenigstens dem Kraftstoffverteilerrohr (14) oder der Klammer (54) anzupassen.

10. Brennkraftmaschine (10) mit innerer Verbrennung nach Anspruch 1, wobei der erste und zweite Bereich (36, 44) jeweils Basisbereiche (40, 48) der wenigstens zwei Lamellen (34), die zusammengeklammert sind, aufweisen.

11. Verfahren zum Zusammenbauen einer Brennkraftmaschine (10) mit innerer Verbrennung aufweisend:
Betreiben der Brennkraftmaschine (10) mit innerer Verbrennung;
thermisches Ausdehnen einer Komponente, die mit der Brennkraftmaschine (10) mit innerer Verbrennung über einen wenigstens zwei nebeneinander angeordnete Lamellen (34) aufweisenden Lamellensatz (32) verbunden ist;
Biegen des Lamellensatzes (32) zum Aufnehmen der Ausdehnung der Komponente.

12. Verfahren nach Anspruch 11, weiterhin ein Deformieren eines elastomerischen Bauteils (62) zum wenigstens teilweise Kompensieren einer durch das Biegen des Lamellensatzes (34) verursachten Achsverschiebung aufweisend.

## Revendications

1. Moteur à combustion interne (10), comprenant :
une première portion de moteur (38) ;
une rampe de carburant (14) ;
une potence (54) configurée pour se raccorder à ladite
rampe de carburant (14) et
un aménagement de montage flexible (30) comprenant :
un jeu de lamelles (32) ayant au moins deux lamelles (34) aménagées adjacentes l'une à l'autre, ledit jeu de lamelles (32) ayant une première portion (36) à raccorder à ladite première portion de moteur (38) et une seconde portion (44) à raccorder à ladite rampe de carburant (14) via ladite potence (54), au moins l'une desdites secondes portions (36, 44) comprenant des portions de base (40, 48) desdites au moins deux lamelles (34) qui sont bloquées l'une à l'autre.

2. Moteur à combustion interne (10) selon la revendication 1, dans lequel lesdites portions de base (40, 48) desdites au moins deux lamelles (34) se trouvent dans une position sensiblement fixe l'une par rapport à l'autre.

3. Moteur à combustion interne (10) selon l'une quelconque des revendications précédentes, dans lequel au moins un élément d'espacement (52) est aménagé entre ledit jeu de lamelles (32) et ladite potence (54).

4. Moteur à combustion interne (10) selon l'une quelconque des revendications précédentes, dans lequel ladite rampe de carburant (14) est raccordée à ladite potence (54) et un élément élastomère (62) est intercalé entre ladite rampe de carburant (14) et ladite potence (54).

5. Moteur à combustion interne (10) selon l'une quelconque des revendications précédentes, dans lequel un élément élastomère (62) est intercalé entre ledit jeu de lamelles (32) et ladite potence (54).

6. Moteur à combustion interne (10) selon la revendication 4, dans lequel, en position neutre, ledit jeu de lamelles (32) et ladite rampe de carburant (14) définissent des premier et second axes longitudinaux (15, 31), respectivement, dans lequel lesdits premier et second axes longitudinaux (15, 31) sont sensiblement perpendiculaires l'un à l'autre.

7. Moteur à combustion interne (10) selon l'une quelconque des revendications précédentes, dans lequel lesdites au moins deux lamelles (34) sont configurées pour fléchir simultanément.

8. Moteur à combustion interne (10) selon l'une quelconque des revendications précédentes, dans lequel ledit jeu de lamelles (32) est configuré pour presser lesdites première et seconde portions (36, 44) vers une première position l'une par rapport à l'autre.

9. Moteur à combustion interne (10) selon l'une quelconque des revendications précédentes, dans lequel ledit aménagement de montage flexible (30) est configuré pour adapter sa forme afin de s'accommoder d'une dilatation thermique d'au moins ladite rampe de carburant (14) ou ladite potence (54).

10. Moteur à combustion interne (10) selon la revendication 1, dans lequel à la fois la première et la seconde portions (36, 44) comprennent des portions de base (40, 48) desdites au moins deux lamelles (34) qui sont bloquées l'une à l'autre.

11. Procédé d'assemblage d'un moteur à combustion
interne (10), comprenant les étapes consistant à : faire fonctionner ledit moteur à combustion
interne (10) ;
dilater thermiquement un composant raccordé audit
moteur à combustion interne (10) via un jeu de lamelles (32) ayant au moins deux lamelles aménagées adjacentes (34) ; et
faire fléchir ledit jeu de lamelles (32) pour
s'accommoder de la dilatation dudit composant.

12. Procédé selon la revendication 11, comprenant en outre la déformation d'un élément élastomère (62) pour compenser au moins en partie un défaut d'alignement provoqué par ladite flexion dudit jeu de lamelles (34).
